# FASCICULE DE BREVET EUROPEEN

(11) **EP 3 119 571 B1**
(45) Date de publication et mention de la délivrance du brevet: **24.01.2024**
(21) Numéro de dépôt: 15711731.8
(22) Date de dépôt: 20.03.2015
(51) Int. Cl.: B28B 7/38, C04B 41/00, C04B 41/46, C04B 41/53, C04B 40/00

(54) **COMPOSITION DÉSACTIVANTE EN ÉMULSION INVERSE**
DESAKTIVIERUNGSZUSAMMENSETZUNG IN FORM EINER INVERTEMULSION
DEACTIVATING COMPOSITION IN THE FORM OF AN INVERT EMULSION

(30) Priorité: 20.03.2014 FR 1452331
(43) Date de publication de la demande: 25.01.2017
(73) Titulaire: CHRYSO, 92400 Courbevoie (FR)
(72) Inventeur: BURLERAUX, Amélie, F-45390 Puiseaux (FR); MATEO, Sandrine, F-77760 Ury (FR)
(74) Mandataire: Lavoix
(86) Numéro de dépôt international: PCT/EP2015/055898
(87) Numéro de publication internationale: WO 2015/140287

(56) Documents cités:
- EP-A1- 1 661 874
- WO-A1-2012/056162
- WO-A1-2014/006102
- FR-A1- 2 991 982
- FR-A1- 2 994 795

## Description

### [Domaine de l'invention]

La présente invention concerne une composition désactivante de surfaces de bétons sous la forme d'une émulsion inverse.

### [Arrière-plan technologique de l'invention]

Une composition de désactivant de surface permet de retarder l'hydratation du ciment à la surface d'un béton. Après le temps habituel de prise permettant la prise du coeur du béton, la matrice cimentaire à prise retardée en surface peut être éliminée par lavage ou brossage, ce qui permet de rendre les granulats apparents et d'obtenir des effets esthétiques particuliers recherchés. Ce procédé de désactivation permet d'obtenir un béton désactivé.

On distingue la désactivation de surfaces au contact avec l'air libre pendant la prise (désactivation positive) et la désactivation de surfaces au contact avec un moule (désactivation négative).

Il est connu de formuler une telle composition désactivante de surface sous forme de solution aqueuse ou de suspension de l'agent retardateur dans un solvant. La demande de brevet EP1526120 décrit des compositions comportant un retardateur de prise dispersé dans une phase huileuse. L'ajout d'un solvant ou d'eau à la composition est envisagé, mais une émulsion n'est pas décrite. La demande de brevet EP2157070 décrit des compositions de retardateur de prise liquides pulvérisables comprenant un ester d'alkyle de composé hydroxycarboxylique distribué sous forme de particules ou solubilisé dans la phase continue non aqueuse.

On connaît par ailleurs de EP 2 632 876 un désactivant de surface sous forme d'émulsion huile dans l'eau qui se rompt au contact de la surface de béton.

La demande de brevet FR 2 991 982 A1 décrit par ailleurs une composition comprenant un retardateur de prise, un agent filmogène hydrosoluble, une huile de démoulage et un latex non alcalisoluble à titre de composition désactivante facilitant le démoulage. Ce document enseigne l'ajout d'huile sous forme d'émulsion inverse, mais ne divulgue pas une composition telle que décrite ci-dessus sous cette forme. EP 1 661 874 A1 décrit une composition désactivante de surface pour béton comprenant un émulsifiant (tensio-actif non ionique), un retardateur superficiel (0,05 à 25% en poids), un polyol (0,1 à15% en poids), un modificateur de rhéologie et une huile en émulsion aqueuse (5 à 10% en poids d'huile). La composition des exemples présente des compositions comprenant 7% d'huile en émulsion et 52,5% d'eau.

Si ces compositions peuvent apporter une solution satisfaisante aux exigences courantes en matière de désactivation, il n'est pas toujours aisé d'obtenir de faibles profondeurs de creuse. En effet, si en principe, la profondeur d'action du désactivant dépend de la nature du retardateur et/ou de sa concentration, la mise en pratique n'est pas toujours aisée. En particulier, le choix de l'agent retardateur peut être très limité. Par ailleurs, une baisse de la concentration en agent retardateur risque d'engendrer une désactivation inhomogène. Il existe donc un intérêt à fournir un système permettant d'obtenir également une faible profondeur de creuse, c'est-à-dire permettant une microdésactivation de la surface de la composition hydraulique.

### [Résumé de l'invention]

L'objectif de la présente invention était de proposer une composition de désactivant en surface sous une forme qui ne présente pas les inconvénients cités. En particulier, il était recherché de proposer une formulation de désactivant de surface qui permette d'obtenir une faible profondeur de creuse, c'est-à-dire une microdésactivation, qui soit homogène.

Cet objectif est atteint selon l'invention par une formulation sous forme d'émulsion inverse, c'est-à-dire comprenant une phase aqueuse dispersée dans une phase huileuse, et au moins un agent retardateur de prise dissout dans la phase aqueuse.

En effet, dans cette formulation, le retardateur de prise se trouve dans la phase aqueuse, laquelle est dispersée dans la phase huileuse et de ce fait le retardateur est moins accessible, atténuant ainsi son activité, permettant ainsi d'obtenir des profondeurs de creuse peu importantes et donc une microdésactivation.

De façon avantageuse, il est possible de moduler la quantité d'huile pour obtenir des creuses encore plus faibles notamment à une concentration donnée en retardateur.

De façon avantageuse, on constate par ailleurs que, dans le cadre de leur utilisation à titre de composition désactivante, les émulsions inverses de l'invention sont plus robustes vis-à-vis d'un changement de température que les émulsions directes, c'est-à-dire que leurs performances de désactivation sont peu influencées par la température.

Les compositions selon l'invention peuvent être utilisées aussi bien pour une désactivation positive que pour une désactivation négative. Dans chacune de ces applications, la présence d'une phase huileuse continue permet l'obtention d'un effet supplémentaire.

En effet, dans la désactivation positive, lorsque la surface traitée est au contact de l'air, la présence de la phase huileuse continue dans la composition de l'invention crée un film huileux freinant l'évaporation de l'eau et permet un effet de cure de la composition hydraulique sur laquelle elle est appliquée.

Dans la désactivation négative, lorsque la surface traitée est au contact du moule, préalablement enduit de la composition de l'invention, la présence de la phase huileuse continue dans la composition de l'invention forme un film huileux à la surface en contact avec le moule et permet d'améliorer le démoulage de la pièce après prise.

### [Description détaillée de l'invention]

### [Définitions]

Dans le cadre de cet exposé, on entend par le terme « retardateur de prise de liants hydrauliques » désigner un composé ayant pour effet de retarder la prise de compositions à base de liant hydraulique, c'est-à-dire de retarder ou inhiber les phénomènes liés à cette prise tels que les phénomènes d'hydratation, induisant de ce fait un durcissement plus tardif de la composition. De manière générale, un retardateur de prise retarde le temps de prise d'une composition à base de liant hydraulique dans laquelle il a été introduit à un dosage d'au plus 5% en poids sec par rapport au poids dudit liant hydraulique, le temps de prise étant mesuré selon le test EN 480-2 (2006). De préférence, le temps de début de prise est retardé d'au moins 30 minutes par rapport à une composition à base de liant hydraulique témoin.

On entend par le terme « liant hydraulique » désigner tout composé ayant la propriété de s'hydrater en présence d'eau et dont l'hydratation permet d'obtenir un solide ayant des caractéristiques mécaniques. Le liant hydraulique peut être en particulier un ciment selon la norme EN 197-1 (2012), notamment un ciment de Portland. Une composition préférée à base de liant hydraulique est par exemple un béton.

Par le terme « ciment », on entend selon l'invention un ciment de type CEM I, CEM II, CEM III, CEM IV ou CEM V selon la norme Ciment NF EN 197-1 (2012).

Par le terme « béton », on entend un mélange de liants hydrauliques, de granulats, d'eau, éventuellement d'additifs, et éventuellement d'additions minérales. Dans le cadre de l'invention, le terme béton comprend les mortiers. Particulièrement visés sont les liants hydrauliques susceptibles de comporter des granulats esthétiquement attractifs comme des gravillons de type quartz, marbre ou granit.

Par « granulats », on entend un ensemble de grains minéraux de diamètre moyen compris entre 0 et 125 mm. Selon leur diamètre, les granulats sont classés dans l'une des six familles suivantes: fillers, sablons, sables, graves, gravillons et ballast (norme NF P 18-545 de septembre 2011). Les granulats les plus utilisés sont les suivants:
- les fillers, qui ont un diamètre inférieur à 2 mm et pour lesquels au moins 85 % des granulats ont un diamètre inférieur à 1,25 mm et au moins 70 % des granulats ont un diamètre inférieur à 0,063 mm,
- les sables de diamètre compris entre 0 et 4 mm (dans la norme 13-242, le diamètre pouvant aller jusqu'à 6 mm),
- les graves de diamètre supérieur à 6,3 mm,
- les gravillons de diamètre compris entre 2 mm et 63 mm.
Les sables sont donc compris dans la définition de granulat selon l'invention. Les fillers peuvent notamment être d'origine calcaire, siliceux ou dolomitique.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1(2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1 (2012) paragraphe 5.2.5), les calcaires (tels que définis dans la norme Ciment NF EN 197-1(2012) paragraphe 5.2.6) ou encore les fumées de silices (telles que définies dans la norme Ciment NF EN 197-1(2012) paragraphe 5.2.7) ou leurs mélanges. D'autres ajouts, non actuellement reconnus par la norme Ciment NF EN 197-1(2012), peuvent aussi être utilisés. Il s'agit notamment des métakaolins, tels que les métakaolins de type A conformes à la norme NF P 18-513 (août 2012), et des additions siliceuses, telles que les additions siliceuses de minéralogie Qz conformes à la norme NF P 18-509 (septembre 2012).

On entend par le terme « frais » qualifier des compositions à base de liant hydraulique lorsqu'elles ont été gâchées avec de l'eau, mais n'ont pas encore durci. Ainsi, pour une désactivation positive, l'émulsion de l'invention est appliquée sur la surface de la composition hydraulique « fraîche », non encore durcie et pour une désactivation négative l'émulsion de l'invention est déposée sur le moule dans lequel la composition hydraulique « fraîche » va être mise en place.

On entend par le terme « microdésactivation » une désactivation de la surface caractérisée par une profondeur de creuse (distance entre le sommet des agrégats de surface et la surface de la matrice cimentaire entourant ces agrégats après élimination de la couche retardée) d'une épaisseur moyenne inférieure à 1 mm, et de préférence inférieure à 0,5 mm. La microdésactivation permet d'obtenir un aspect sablé et correspond à une profondeur de creuse qui laisse apparaître uniquement les grains de sable, ou tout au plus la partie supérieure de tout granulat de taille supérieure à celle d'un sable (de taille < 4 mm) qui serait compris dans la composition hydraulique.

On entend par le terme « phase huileuse » dans le cadre de ce document, une phase non aqueuse hydrophobe, non miscible avec l'eau.

On entend par le terme « émulsifiant » désigner un composé possédant une partie hydrophile et une partie hydrophobe de sorte qu'en se positionnant à l'interface eau/huile, il abaisse l'énergie d'interface et facilite de ce fait l'émulsification. Les émulsifiants, appelés parfois émulsionnants, stabilisent l'émulsion.

On entend par le terme « émulsion» désigner un mélange intime de deux substances liquides non miscibles, une substance étant à base d'eau et l'autre à base d'un liquide non miscible avec l'eau. L'une des substances, appelée phase dispersée, est dispersée dans la seconde substance, appelée phase continue, sous forme de petites gouttelettes. La taille des gouttelettes est variable et peut être de l'ordre du nanomètre (mini- ou nanoémulsion), micromètre (microémulsion) ou supérieure au micromètre (macroémulsion). Afin que le mélange reste stable, l'émulsion contient généralement un troisième ingrédient appelé émulsifiant.

On entend par le terme « émulsion inverse » désigner une émulsion dans laquelle la phase aqueuse est dispersée dans la phase huileuse. Il peut s'agir d'une émulsion inverse simple ou multiple. Dans une émulsion multiple, il existe plusieurs phases dispersées. Ainsi, dans une émulsion inverse double, la phase huileuse dans laquelle est dispersée une phase aqueuse dite interne est elle-même dispersée dans une phase aqueuse dite externe.

On entend par le terme « température ambiante » désigner une température d'environ 20°C. Par « hydrosoluble », on entend tout composé ayant une solubilité dans l'eau à 20°C supérieure à 1 g/l, de préférence supérieure à 10 g/I.

### [Description détaillée de l'invention]

L'invention propose donc une émulsion inverse notamment utile à titre de composition de retardateur de prise, constituée d'une phase huileuse continue comprenant au moins un émulsifiant et dans laquelle est dispersée une phase aqueuse comprenant au moins un composé retardateur de prise de liants hydrauliques.

### [Phase huileuse]

L'émulsion inverse selon l'invention comporte une phase huileuse non miscible avec l'eau.

La phase huileuse peut comporter une ou plusieurs huiles qui peuvent être liquides à température ambiante ou non. Lorsqu'elles ne sont pas liquides à température ambiante, la composition de l'invention est préparée de préférence à chaud.

Généralement, la phase huileuse elle-même est liquide à température ambiante.

Les huiles peuvent être notamment d'origine végétale, animale ou minérale. Une liste de ces huiles est notamment donnée dans la demande de brevet WO85/05066.

L'huile végétale peut notamment être choisie parmi l'huile de colza, l'huile de palme, l'huile de coprah, l'huile de ricin, l'huile d'arachide, l'huile de pépin de raisin, l'huile de maïs, l'huile de canola, l'huile de lin, l'huile de noix de coco, l'huile de soja, l'huile de tournesol et leurs mélanges.

L'huile animale peut être choisie en particulier parmi le suif, la suintine, l'huile de lard, l'huile de hareng, l'huile de foie de morue, l'huile de sardine, l'huile de poisson et l'huile de lanoline et leurs mélanges.

L'huile minérale peut notamment être une huile aliphatique, paraffinique, isoparaffinique ou naphténique, y compris en particulier les fractions comportant en moyenne 8 à 30 atomes de carbone, de préférence 11 à 25 atomes de carbone, seules ou en mélange, notamment l'huile minérale claire. Les huiles privilégiées sont les huiles minérales CₙH₂ₙ₊₂, avec n compris entre 8 et 19.

La phase huileuse peut par ailleurs contenir d'autres corps gras, notamment un ou plusieurs corps gras choisi parmi les cires, les graisses, les acides gras et leurs dérivés et les alcools gras et leurs dérivés.

Afin d'augmenter sa stabilité et faciliter sa préparation, l'émulsion inverse selon l'invention comporte en outre un ou plusieurs émulsifiants.

De préférence, il s'agit d'émulsifiants à faible indice HLB (balance lipophile/hydrophile) et donc ayant une affinité forte vis-à-vis de la phase huileuse ou un mélange d'émulsifiants de HLB variés mais pour lequel l'indice HLB global est faible.

Par le terme « indice HLB faible » on entend désigner un HLB inférieur à 11, de préférence inférieur à 8, de préférence compris entre 3 et 6. Au moins un des émulsifiants est soluble dans la phase huileuse. Dans le cas où il est fait usage d'un mélange d'émulsifiants, au moins un émulsifiant est soluble dans la phase huileuse, les autres pouvant être solubles dans la phase aqueuse ou la phase huileuse.

L'émulsion inverse de l'invention comprend donc un ou plusieurs émulsifiants. A titre d'exemple d'émulsifiants, on peut citer les émulsifiants anioniques, amphotères, zwitterioniques, cationiques ou nonioniques.

On entend par " émulsifiant anionique", un émulsifiant ne comportant à titre de groupements ioniques ou ionisables que des groupements anioniques. Ces groupements anioniques sont choisis de préférence parmi les groupements -C(O)OH, -C(O)O-, -SO₃H, -S(O)₂O-, -OS(O)₂OH, -OS(O)₂O-, -P(O)OH₂, -P(O)₂O-, -P(O)O₂, -P(OH)₂, =P(O)OH, - P(OH)O-, =P(O)O-, =POH, =PO-, les parties anioniques comprenant un contre ion cationique tel que un métal alcalin, un métal alcalino-terreux, ou un ammonium.

A titre d'exemples d'émulsifiants anioniques, on peut citer, sans intention de s'y limiter:
- les acides alkylsulfoniques, les acides arylsulfoniques, éventuellement substitués par un ou plusieurs groupements hydrocarbonés ou par au moins un groupement alcoxylé (éthoxylé, propoxylé, éthopropoxylé), et dont la fonction acide peut être partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyles en C1-C30, de préférence en C₄-C₁₆, et/ou alcényles en C₂-C₃₀, de préférence en C₄-C₁₆.
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés).
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé ou éthopropoxylé, c'est-à-dire comportant à la fois des motifs éthoxylés et propoxylés). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé.
- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40; les esters sulfates obtenus à partir de mono-, di- ou tristyrylphénol polyalcoxylés dans lesquels le nombre de motifs alcoxylés varie de 2 à 40. Lorsque le ou les tensioactifs anioniques sont sous forme de sel(s), il(s) peu(ven)t être choisi(s) parmi les sels de métaux alcalins tels que le sel de sodium ou de potassium et de préférence de sodium, les sels d'ammonium, les sels d'amines et en particulier d'aminoalcools ou les sels de métaux alcalino-terreux.

On utilise de préférence les sels de métaux alcalins ou alcalino-terreux et en particulier les sels de sodium ou de magnésium. Parmi les tensioactifs anioniques cités, on préfère utiliser les alkyl(C₆-C₂₄)sulfates, les alkyl(C₆-C₂₄)éthersulfates comprenant de 2 à 100 motifs oxyde d'éthylène, notamment sous forme de sels de métaux alcalins, d'ammonium, d'aminoalcools, et de métaux alcalino-terreux, ou un mélange de ces composés.

Le ou les émulsifiants amphotères ou zwittérioniques utilisables dans la présente invention sont notamment des dérivés d'amines aliphatiques secondaire ou tertiaire, éventuellement quaternisées, dans lesquels le groupe aliphatique est une chaîne linéaire ou ramifiée comportant de 8 à 22 atomes de carbone, lesdits dérivés d'amines contenant au moins un groupe anionique tel que, par exemple, un groupe carboxylate, sulfonate, sulfate, phosphate ou phosphonate. On peut citer en particulier les alkyl(C₈-C₂₀)bétaïnes, les sulfobétaïnes, les alkyl(C₈-C₂₀)amidoalkyl(C₃-C₈)bétaïnes et les alkyl(C₈-C₂₀)-amidoalkyl(C₆-C₈)sulfobétaïnes.

Parmi les dérivés d'amines aliphatiques secondaires ou tertiaires, éventuellement quaternisées utilisables, on peut citer le cocoamphodiacétate de disodium, lauroampho-diacétate de disodium, caprylamphodiacétate de disodium, capryloamphodiacétate de disodium, cocoamphodipropionate de disodium, lauroamphodipropionate de disodium, caprylamphodipropionate de disodium, capryloamphodipropionate de disodium, acide lauroamphodipropionique, acide cocoamphodipropionique.

Parmi les émulsifiants amphotères ou zwittérioniques cités ci-dessus, on utilise de préférence les alkyl(C₈-C₂₀)bétaines tel que la cocobétaïne, les alkyl(C₈-C₂₀)amidoalkyl(C₃-C₈)bétaïnes tel que la cocamidopropylbétaïne, et leurs mélanges. Plus préférentiellement, le ou les émulsifiants amphotères ou zwittérioniques sont choisis parmi la cocamidopropylbétaïne et la cocobétaïne.

Le ou les émulsifiants cationiques utilisables dans la composition selon l'invention comprennent par exemple les sels d'amines grasses primaire, secondaire ou tertiaire, éventuellement polyoxyalkylénées, les sels d'ammonium quaternaire, et leurs mélanges.

A titre de sels d'ammonium quaternaire, on peut notamment citer, par exemple:
- ceux répondant à la formule générale suivante :

   [NR₁R₂R₃R₄]⁺ X⁻

   dans laquelle : - R₁ à R₄, identiques ou différents, représentent un groupe aliphatique, linéaire ou ramifié, comportant de 1 à 30 atomes de carbone, ou un groupe aromatique tel que aryle ou alkylaryle, et X représente un anion monovalent organique ou inorganique, tel que celui choisi parmi les halogénures, acétates, phosphates, nitrates, alkyl(C₁-C₄)sulfates, alkyl(C₁-C₄)- ou alkyl(C₁-C₄)aryl-sulfonates, en particulier méthylsulfate et éthylsulfate. Les groupes aliphatiques de R₁ à R₄ peuvent en outre comporter des hétéroatomes tels que notamment l'oxygène, l'azote, le soufre et les halogènes ;
- les sels d'ammonium quaternaire de l'imidazoline ; et
- les sels de di- ou de triammonium quaternaire.

A titre d'exemple d'émulsifiants non ioniques, on peut citer, sans intention de s'y limiter:
- les phénols polyalcoxylés (éthoxylés, propoxylés, éthopropoxylés) substitués par au moins un radical alkyle en C₄-C₂₀, de préférence en C₄-C₁₂, ou substitués par au moins un radical alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphenols éthoxylés et/ou propoxylés, sulfatés et/ou phosphatés, on peut citer, le di-(phényl- 1 éthyl)phénol éthoxylé, contenant 10 motifs oxyéthylénés, le di-(phényl- 1 éthyl)phénol éthoxylé, contenant 7 motifs oxyéthylénés, le di-(phényl-1 éthyl)phénol éthoxylé sulfaté, contenant 7 motifs oxyéthylénés, le tri- (phényl-1 éthyl)phénol éthoxylé, contenant 8 motifs oxyéthylénés, le tri- (phényl-1 éthyl)phénol éthoxylé, contenant 16 motifs oxyéthylénés, le tri- (phényl-1 éthyl)phénol éthoxylé sulfaté, contenant 16 motifs oxyéthylénés, le tri-(phényl-1 éthyl)phénol éthoxylé, contenant 20 motifs oxyéthylénés, le tri-(phényl-1 éthyl)phénol éthoxylé posphaté, contenant 16 motifs oxyéthylénés ;
- les alcools ou les acides gras en C₆-C₂₂, éventuellement polyalcoxylés (éthoxylés, propoxylés, éthopropoxylés). Dans le cas où ils sont présents, le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol ;

- les esters de sorbitan polyalcoxylés (éthoxylés, propoxylés, éthopropoxylés), plus particulièrement les esters de sorbitol cyclisé d'acides gras de C₁₀ à C₂₀ comme l'acide laurique, l'acide stéarique ou l'acide oléique, et comprenant un nombre total de motifs alcoxylés compris entre 2 et 50 ;
- les condensats d'oxyde d'éthylène et/ou d'oxyde de propylène, entre autres, seuls ou en mélanges ; et
- les silicones oxyéthylénées et/ou oxypropylénées.

Les tensioactifs oxyalkylénés peuvent être éventuellement remplacés par des tensioactifs mono- ou poly- glycérolés.

L'émulsion inverse peut par ailleurs contenir également un co-émulsifiant. Le co-émulsifiant se place aux interfaces huile / eau, renforçant l'effet de l'émulsifiant en abaissant encore plus la tension interfaciale, en renforçant les propriétés mécaniques de l'interface et/ou en limitant la diffusion des espèces chimiques entre les phases. Les coémulsifiants sont de préférence choisis parmi les alcools et les amines aliphatiques. Le co-émulsifiant peut être par exemple le dodécanol.

La quantité d'émulsifiant présent dans l'émulsion inverse selon l'invention dépend de l'application envisagée. Le plus souvent, elle sera comprise entre 0.01% et 20%, de préférence entre 0.5% et 10%, de préférence entre 1 et 5%.

Dans le cadre du présent exposé, le terme « phase huileuse » inclut les additifs liposolubles, notamment le ou les émulsifiants solubles dans la phase huileuse de l'émulsion.

La phase huileuse peut contenir en outre des solvants d'origine minérale ou végétale.

La quantité de la phase huileuse dans l'émulsion selon l'invention peut varier largement. Généralement, elle est comprise entre 25 et 75% et particulièrement 50 à 75% en poids du poids total de la composition. De préférence, l'émulsion inverse comporte une proportion majoritaire de phase huileuse.

### [Phase aqueuse]

La phase aqueuse dans l'émulsion selon l'invention est dispersée dans la phase huileuse et forme dès lors la phase dispersée de l'émulsion inverse.

C'est dans la phase aqueuse qu'est dissout au moins un composé retardateur de prise. En effet, le retardateur de prise est hydrosoluble.

Dans le cadre de la présente invention, le composé retardateur de prise peut être choisi notamment parmi les acides carboxyliques et acides hydroxycarboxyliques. En complément, il peut être choisi également parmi les acides lignosulfoniques, acides phosphoniques, en particulier ceux portant des groupements amino ou hydroxy, et acides inorganiques comme l'acide phosphorique, et les hydrates de carbone, notamment les sucres, ainsi que leurs mélanges et dérivés. Les dérivés incluent notamment les sels des acides et leurs esters. Parmi les sels d'acide, on peut mentionner notamment les sels de sodium et potassium.

Parmi les acides carboxyliques, on peut mentionner notamment l'acide acétique.

De préférence, l'acide carboxylique présente un pK_{A} compris entre 2 et 5. L'acide carboxylique peut comporter une chaîne carbonée saturée ou insaturée et posséder un, deux ou trois groupes carboxyliques ainsi que le cas échéant un, deux, trois ou plus de groupes hydroxyle.

Particulièrement préférés sont les acides hydroxycarboxyliques, notamment l'acide citrique, l'acide tartrique, l'acide malique, l'acide gluconique, l'acide maléique et l'acide lactique, ainsi que l'un de leurs mélanges et dérivés. Les dérivés incluent notamment les sels des acides et leurs esters. Parmi les sels d'acide, on peut mentionner notamment les sels de sodium et potassium. L'acide citrique, l'acide tartrique et l'acide malique et leurs sels et mélanges sont préférés. A titre d'exemple particulier, on peut citer le citrate de sodium, le tartrate de sodium ou le gluconate de sodium.

On entend par les dérivés d'acides notamment désigner, à condition que ces dérivés soient hydrosolubles, leurs esters, notamment leurs esters d'alkyle, et tout particulièrement d'alkyle en C1 à C4, tel que l'acétate d'éthyle. Lorsqu'il s'agit d'acides hydroxycarboxyliques, les dérivés incluent également les lactones.

Parmi les sucres, le retardateur de prise peut être choisi en particulier parmi le glucose, le fructose, le saccharose, le méritose, le lactose, le maltotriose, le dextrose, le maltose, le galactose, le mannose, le glycogène ou l'un de leurs mélanges.

De préférence, le retardateur de prise est choisi parmi le glucose, le fructose, le saccharose, le méritose, le lactose, le maltotriose, le dextrose, le maltose, le galactose, le mannose, le glycogène, l'acide citrique, l'acide tartrique, l'acide malique, l'acide gluconique, l'acide maléique, l'acide lactique et leurs sels ou l'un de leurs mélanges.

Le dosage en retardateur de prise dans l'émulsion selon l'invention peut être choisi selon l'application envisagée. En effet, pour un retardateur de prise donné, une concentration plus élevée permettra l'obtention d'un effet désactivant plus profond. Le plus souvent, la teneur en retardateur de prise sera comprise de 0,1 à 20%, de préférence de 0,5 à 15% et tout particulièrement de 1 à 10% en poids de l'émulsion.

Dans le cadre du présent exposé, le terme « phase aqueuse » inclut les additifs hydrosolubles, notamment le ou les retardateurs de prise hydrosolubles dans l'émulsion. Toutefois, l'émulsion selon l'invention est de préférence dépourvue d'additifs hydrosolubles polymériques, notamment d'agent filmogène.

L'émulsion peut comprendre 15 à 70% et particulièrement de 25 à 50% en poids de phase aqueuse.

Les phases aqueuse et/ou huileuse peuvent comporter en outre d'autres additifs habituels tels que des agents anti-mousse, des charges minérales, des épaississants, des colorants, des agents biocides et des opacifiants. Elles peuvent par ailleurs contenir des dispersants.

Selon un mode de réalisation particulièrement préféré, l'émulsion comprend en % en poids par rapport au poids total de la composition:
- 45 à 80% de phase huileuse ;
- -de 25 à 50% en poids de phase aqueuse
l'émulsion comportant par ailleurs :
- 0,01 à 20%, de préférence 0,5 à 10%, de préférence 1 à 5% d'émulsifiant; et
- 0,1 à 20%, de préférence 0,5 à 15% et tout particulièrement de 1 à 10% de retardateur de prise dissout dans la phase aqueuse.

L'émulsion inverse peut aussi se présenter sous la forme d'une émulsion multiple, par exemple d'une émulsion huile dans eau dans huile ou encore une émulsion eau dans huile dans eau. Dans ce dernier cas, on veillera à ce que le retardateur hydrosoluble soit présent essentiellement dans la phase aqueuse interne.

Avantageusement, l'émulsion inverse selon l'invention est stable au stockage.

### [Procédé de préparation de l'adjuvant]

L'émulsion inverse selon l'invention peut être obtenue par l'un quelconque des procédés connus à cette fin.

Un procédé approprié permettant de préparer l'émulsion inverse selon l'invention comprend les étapes de :
(i) préparer la phase aqueuse comprenant au moins un composé retardateur de prise, les autres additifs éventuels et le cas échéant au moins un émulsifiant;
(ii) préparer la phase huileuse comprenant les additifs éventuels et au moins un émulsifiant approprié; et
(iii) mélanger les deux phases au moyen d'un dispositif approprié jusqu'à l'obtention d'une émulsion inverse.

L'étape (ii) peut être réalisée le cas échéant en chauffant à une température comprise entre 20 et 80°C, de préférence à une température comprise entre 50 et 70°C le cas échéant afin de fondre et mélanger les différents corps gras.

Les dispositifs d'émulsification appropriés pour l'étape (iii) incluent en particulier les mélangeurs de type rotor-stator comme les modèles Silverson, les réacteurs équipés de mobiles d'agitation cisaillants tels que les turbines Rushton et les turbines radiales dites à dents de scie ou pales défloculeuses. Afin de faciliter l'émulsification, on ajoute de préférence la phase aqueuse à la phase huileuse.

### [Procédé d'utilisation de l'émulsion]

Comme évoqué ci-dessus, l'émulsion selon l'invention est particulièrement utile pour la désactivation en surface de compositions hydrauliques, notamment de bétons.

Aussi, selon un troisième aspect, l'invention vise un procédé de désactivation positive en surface d'une composition hydraulique, comprenant les étapes consistant en :
(a) la mise en forme de la composition hydraulique ;
(b) l'application sur la surface de la composition hydraulique de l'émulsion inverse selon l'invention; et
(c) après durcissement de la composition hydraulique, l'élimination des résidus de l'émulsion de l'invention avec la couche superficielle de composition hydraulique non durcie.

Avantageusement, l'étape (a) est réalisée par coulage et talochage, et si nécessaire, par vibration.

L'étape (b) d'application sur la surface de la composition hydraulique peut être réalisée notamment par pulvérisation et/ou au rouleau.

L'étape (c) peut être réalisée notamment par lavage à l'eau ou par brossage.

De manière surprenante, l'émulsion est efficace au même dosage qu'une formulation classique.

De préférence, l'application de l'émulsion est efficace lorsqu'elle est réalisée à raison de 50 à 400 g/ m² et de préférence de 100 à 300 g/ m².

Après 12 à 24 heures de durcissement de la masse de la composition hydraulique, la surface à prise retardée présente un aspect sec. Il est alors possible de dégager les granulats par élimination des résidus de l'émulsion de l'invention et de la couche superficielle de la composition hydraulique non prise. Cette étape peut être réalisée comme habituellement par lavage au jet d'eau ou par élimination à sec, par exemple par brossage, jusqu'à 96 heures après application.

La surface peut être aisément débarrassée de la couche superficielle comportant la composition hydraulique retardée et l'émulsion selon l'invention et on obtient une surface désactivée faisant apparaître les sables et/ou une partie superficielle des granulats pour conduire à l'aspect esthétique recherché.

L'émulsion inverse selon l'invention permet alors l'obtention d'une combinaison d'effets spécifiques en ce que la phase aqueuse assure une diffusion homogène du retardateur de prise dans la couche superficielle de la composition hydraulique et la phase huileuse assure par son effet de cure une protection efficace de la surface à l'évaporation et aux intempéries et empêche ainsi le séchage du béton.

Ainsi, l'émulsion selon l'invention permet d'obtenir la formation d'une surface friable susceptible d'être éliminée à sec ou par lavage à l'eau pendant une durée prolongée, allant jusqu'à 96 heures.

Dans un autre mode de réalisation, l'invention vise un procédé de désactivation négative en surface d'une composition hydraulique, comprenant les étapes consistant en :
(1) l'application d'une quantité appropriée de l'émulsion selon l'invention sur la surface d'un moule approprié ;
(2) la mise en place de la composition hydraulique dans le moule; et
(3) après durcissement de la composition hydraulique, le démoulage de la pièce et élimination des résidus de l'émulsion et de la couche superficielle non prise.

Typiquement, l'étape (1) est réalisée par pulvérisation ou par application au rouleau.

Avantageusement, l'étape (2) est réalisée par coulage puis talochage, et si nécessaire, par vibration.

De manière surprenante, l'émulsion est efficace au même dosage qu'une formulation classique.

De préférence, l'application de l'émulsion est efficace lorsqu'elle est réalisée à raison de 40 à 400 g/ m² et de préférence de 70 à 250 g/ m².

Après 12 à 24 heures de durcissement de la masse de la composition hydraulique, la surface à prise retardée présente un aspect sec. Il est alors possible de démouler la pièce. La surface de la pièce démoulée peut être nettoyée par jet d'eau ou bien par simple brossage. L'étape (3) peut être réalisée notamment par lavage à l'eau ou par brossage.

L'émulsion inverse selon l'invention permet alors l'obtention d'une combinaison d'effets spécifiques en ce que la phase aqueuse assure une diffusion homogène du retardateur de prise dans la couche superficielle de la composition hydraulique et la phase huileuse assure un démoulage aisé de la pièce après prise.

### [Utilisation]

Comme évoqué précédemment, l'émulsion décrite est particulièrement utile notamment à titre de composition microdésactivante de surface de liants hydrauliques, notamment en raison du fait qu'elle est susceptible de permettre l'obtention de faibles creuses homogènes.

Aussi, selon un dernier aspect, l'invention vise l'utilisation de l'émulsion selon l'invention pour la désactivation positive ou négative en surface de liants hydrauliques, notamment de bétons.

L'utilisation peut se faire en particulier, comme expliqué précédemment, par application sur la surface du liant hydraulique fraîchement mis en forme lorsqu'il s'agit d'une désactivation positive. En alternative, elle peut être réalisée par enduction des parois du moule avant introduction du liant hydraulique, l'enduction étant réalisée par pulvérisation ou par dépôt de la composition au rouleau.

L'invention sera décrite plus en détail dans les exemples qui suivent, donnés à titre purement illustratif.

### [EXEMPLES]

Sauf mention contraire, les proportions sont indiquées dans ce qui suit en % en poids par rapport au poids total de l'émulsion.

### EXEMPLES 1 à 3

Dans un récipient approprié muni de moyens d'agitation mécanique, on introduit:
- 265,3 parties d'hydrocarbures aliphatiques C10-C13 ;
- 138,1 parties d'hydrocarbures aliphatiques C15-C20 ; et
- 64,3 parties d'une huile minérale de base paraffinique raffinée.

Ce mélange est mis à chauffer avec comme consigne 65°C. Lorsque la température a atteint 40°C, on introduit en outre 12,4 parties d'un acide gras de suint, 28,5 parties d'une cire paraffinique, dont la température de congélation est comprise entre 71 et 82°C, et 11,4 parties d'une alkylamine éthoxylée. On chauffe jusqu'à atteindre la température de 65°C, et l'on poursuit l'homogénéisation à cette température pendant 5 minutes. De façon surprenante, bien que la température du mélange soit inférieure à la température de congélation des cires, on arrive à solubiliser lesdites cires dans la phase huileuse.

Dans un autre récipient approprié, on procède à la dissolution du retardateur dans l'eau, à température ambiante.

On place le récipient contenant la phase huileuse sous agitation assurée par un mélangeur haut cisaillement de laboratoire de marque Silverson, modèle L4RT muni d'une grille d'émulsion fine (diamètre des trous = 0,8 mm), et l'on introduit la phase aqueuse. On procède ainsi à l'émulsification sous cisaillement (à vitesse maximale dudit mélangeur) pendant 5 minutes.

**Tableau 1 : Compositions des émulsions inverses selon l'invention**

| **Exemple** | **Phase huileuse** [% en poids] | **Eau** [% en poids] | **Acide tartrique** [% en poids] | **Glucona te de sodium** [% en poids] | **Saccharose** [% en poids] |
|---|---|---|---|---|---|
| 1 | 52 | 40 | 8 | | |
| 2 | 52 | 46,5 | | 1,5 | |
| 3 | 52 | 43 | | 2,5 | 2,5 |

### A. Evaluation de l'effet de désactivation positive pour différents bétons

L'effet de désactivation positive des émulsions inverses 1 et 2 selon l'invention a été testé sur une composition de béton A dont la composition au m³ est indiquée dans le tableau 2 ci-dessous (dans les formules de béton, les pourcentages sont donnés en masse par rapport à la masse de ciment).

**Tableau 2 : Composition de béton A**

| **Composants** | **Teneur** [kg/m3] |
|---|---|
| Granulat fin (0/4 Bernières) | 1209 |
| Granulat moyen 4/8 Palvadeau | 313 |
| Granulat grossier | 205 |
| 8/12 Palvadeau | |
| Ciment (CEM III 52.5 L Le Havre) | 350 |
| Colorant | 5 |
| Plastifiant (CHRYSO^{®}Plast CER) | 0,35% |
| Eau totale | 189 L |

La composition de béton A fraîchement préparée est mise en place dans des moules 40 cm * 40 cm puis l'émulsion inverse 1 et 2 selon l'invention est appliquée sur la surface par pulvérisation, avec un dosage d'environ 200 g/m².

Les moules comprenant la composition de béton A traitée avec l'émulsion inverse 2 sont ensuite placés à 3 températures différentes : 10°C, 20°C et 30°C et le moule comprenant la composition de béton A traitée par l'émulsion inverse 1 a été placé à 20°C. Après 24h passées à ces températures, les dalles sont lavées au jet d'eau haute pression.

La profondeur de creuse en surface des dalles obtenues a été évaluées visuellement. Les résultats sont résumés dans le tableau 5 ci-dessous.

L'effet de désactivation positive de l'émulsion inverse 3 selon l'invention a été testé sur une composition de béton B dont la composition au m³ est indiquée dans le tableau 3 ci-dessous (dans les formules de béton, les pourcentages sont donnés en masse par rapport à la masse de ciment).

**Tableau 3 : Composition de béton B**

| **Composants** | **Teneur** [kg/m3] |
|---|---|
| Granulat fin (0/4 Bernières) | 600 |
| Granulat grossier (8/12 Lampourdier) | 313 |
| Ciment (CEM Il B/LL 52.5 N Le Teil) | 350 |
| Entraîneur d'air (CHRYSO^{®}Air G100) | 0,05% |
| Plastifiant (CHRYSO^{®}Plast 209) | 0,35% |
| Eau totale | 180 L |

La composition de béton B fraîchement préparée est mise en place dans un moule 40 cm * 40 cm puis l'émulsion inverse 3 selon l'invention est appliquée sur la surface par pulvérisation, avec un dosage d'environ 200 g/m².

Le moule comprenant la composition de béton B traitée avec l'émulsion inverse 3 est ensuite placé à 20°C. Après 24h passées à ces températures, les dalles sont lavées au jet d'eau haute pression.

La profondeur de creuse en surface des dalles obtenues a été évaluées visuellement. Les résultats sont résumés dans le tableau 5 ci-dessous

L'effet de désactivation positive de l'émulsion inverse 3 selon l'invention a également été testé sur une composition de béton C dont la composition au m³ est indiquée dans le tableau 4 ci-dessous (dans les formules de béton, les pourcentages sont donnés en masse par rapport à la masse de ciment).

La composition de béton C fraîchement préparée est mise en place dans des moules 40 cm * 40 cm puis l'émulsion inverse 3 selon l'invention est appliquée sur la surface par pulvérisation, avec un dosage d'environ 200 g/m².

**Tableau 4 : Composition de béton C**

| **Composants** | **Teneur** [kg/m3] |
|---|---|
| Granulat fin (0/4 Bernières) | 600 |
| Granulat grossier (8/12 Lampourdier) | 1230 |
| Ciment (CEM I 52.5 N Saint Pierre La Cour) | 350 |
| Entraîneur d'air (CHRYSO^{®}Air G100) | 0,05% |
| Plastifiant (CHRYSO^{®}Plast 209) | 0,35% |
| Eau totale | 180 L |

Le moule a été placé à 30°C dans une atmosphère à 30% d'humidité relative. Au bout de 24h, les dalles sont lavées au jet d'eau haute pression.

La profondeur de creuse en surface des dalles obtenues a été évaluée. Les résultats sont résumés dans le tableau 5 ci-dessous

### B. Evaluation de l'effet de cure

La performance de cure de l'émulsion inverse 2 a été en outre évaluée (dosage 250 g/m²) selon le protocole décrit par la norme NF P18-371 2013 (évaluation des coefficients de protection à 6h et 24h). Dans ce test, les quantités moyennes d'eau qui s'évaporent de trois éprouvettes de mortier traitées par l'émulsion inverse 2 de l'invention et de trois éprouvettes témoins non traitées, à 30°C et 50% d'humidité relative au bout de 6 heures et de 24 heures, sont évaluées. Le coefficient de protection (en %) est obtenu par la différence entre la perte d'eau moyenne des éprouvettes témoins et la perte d'eau moyenne des éprouvettes traitées divisée par la perte d'eau moyenne des éprouvettes témoins multipliée par 100.

Plus le coefficient de protection est élevé, plus le produit testé permet de limiter l'évaporation de l'eau du mortier.

Les résultats sont résumés dans le tableau 5 ci-dessous :

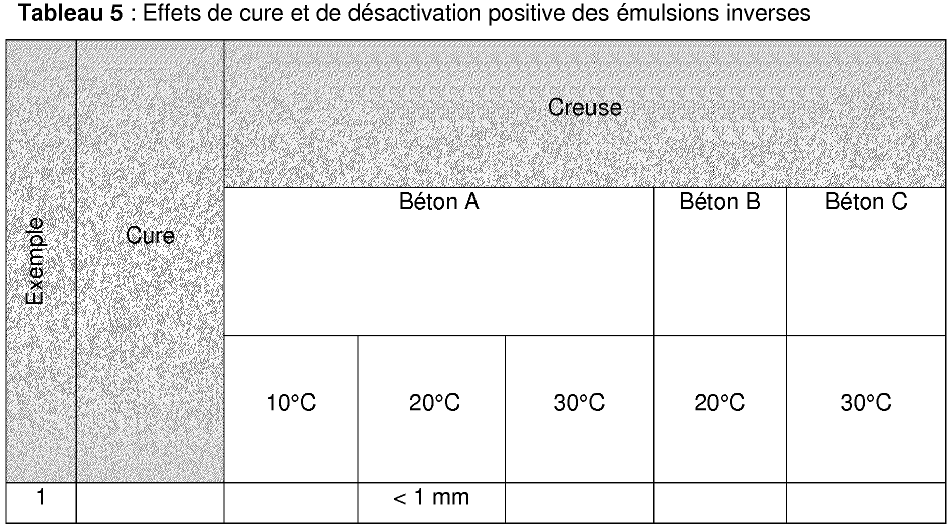

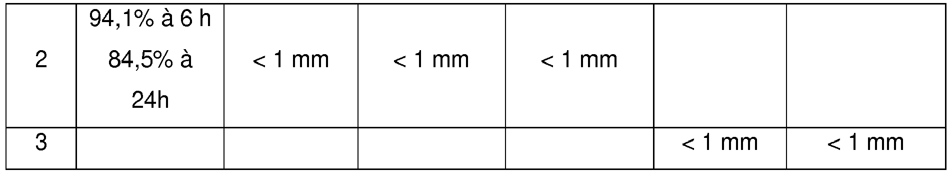

Les résultats mettent en évidence que l'émulsion inverse selon la présente invention, grâce à la dispersion de la phase aqueuse, assure un effet de microdésactivation associé à un effet de cure sur le béton lorsqu'elle est utilisée en positif.

L'aspect de désactivation en terme de creuse est identique à 10°C, 20°C et 30°C ce qui démontre une robustesse du désactivant vis-à-vis des conditions de température.

Le coefficient de cure d'une émulsion directe de composition suivante a également été déterminé par la méthode décrite ci-dessus :

| Constituant de l'émulsion directe | Quantité [kg] |
|---|---|
| Huile végétale | 5,5 |
| Emulsifiants | 2,39 |
| Suintine | 5,2 |
| Parfum | 0,2 |
| Eau | 64,58 |
| Epaississants | 1,57 |
| Antimousse | 0,15 |
| Glycérine | 5 |
| Acide tartrique | 6,2 |
| Opacifiant | 3 |
| Colorant | 0,01 |
| Biocide | 0,2 |
| Coupe pétrolière C10-C13 | 3 |
| Dispersion de styrène/butadiène | 3 |

Le coefficient de protection (dosage de l'émulsion directe : 250 g/m²) obtenu est de 27% à 6 heures et 29% à 24 heures.

Ces résultats montrent que l'émulsion inverse de l'invention permet de façon avantageuse d'obtenir de très bons coefficients de protection comparativement à une émulsion directe et permet donc une meilleure protection face à l'évaporation de l'eau.

### EXEMPLES 4 et 5

Dans un récipient approprié muni de moyens d'agitation mécanique, on introduit :
- 198,75 g d'hydrocarbures aliphatiques C10-C13 ;
- 103,5 g d'hydrocarbures aliphatiques C15-C20 ; et
- 50,25 g d'une huile minérale de base paraffinique raffinée.

Cette phase est mise à chauffer avec comme consigne 65°C. Lorsque la température a atteint 40°C, on introduit en outre 7,13 g d'un acide gras de suint, 21,38 g d'une cire paraffinique, dont la température de congélation est comprise entre 71 et 82°C, 8,55 g d'une alkylamine éthoxylée et 4,20 g d'un biocide. On chauffe jusqu'à atteindre la température de 65°C, et l'on poursuit l'homogénéisation à cette température pendant 5 minutes.

Dans un autre récipient approprié, on procède à la dissolution de la quantité souhaitée de retardateur dans l'eau, à température ambiante.

On place le récipient contenant la phase huileuse sous agitation assurée par un mélangeur haut cisaillement de laboratoire de marque Silverson, modèle L4RT muni d'une grille d'émulsion fine (diamètre des trous = 0,8 mm), et l'on introduit la phase aqueuse. On procède ainsi à l'émulsification sous cisaillement (à vitesse maximale dudit mélangeur) pendant 5 minutes.

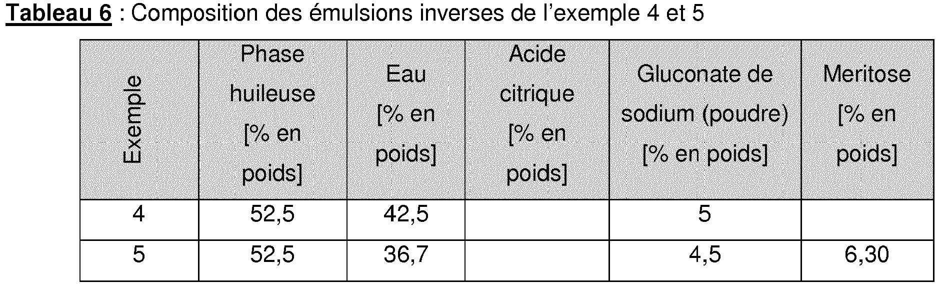

### C. Evaluation de l'effet de désactivation négative

Un moule carré pour pièce de béton préfabriqué (acier, dimension 40*40 cm) a été enduit au rouleau avec 17,7 g de l'émulsion inverse de l'exemple 4. Dans le moule ainsi enduit a été coulé un béton D fraîchement préparé de composition indiquée dans le tableau 7 ci-dessous (dans les formules de béton, les pourcentages sont donnés en masse par rapport à la masse du ciment).

**Tableau 7 : Composition de béton D**

| **Composants** | **Teneur** [kg] |
|---|---|
| Granulat fin | 390 |
| (0/4 Bernières) | |
| Granulat grossier | 1500 |
| (8/12 Lampourdier) | |
| Ciment | 400 |
| (CEM I 52.5 N Le Teil Super Blanc) | |
| Plastifiant | 0,35% |
| (CHRYSO^{®} Optima 206) | |
| Eau totale | 173 L |
| Total | 2464.8 |

Un moule carré pour pièce de béton préfabriqué (acier, dimension 40*40 cm) a été enduit au rouleau avec 14,8 g de l'émulsion inverse de l'exemple 5 avant de couler la composition de béton E fraîchement préparée, de composition indiquée dans le tableau 8 ci-dessous (dans les formules de béton, les poucentages sont donnés en masse par rapport au ciment).

**Tableau 8 : Composition de béton E**

| **Composants** | **Teneur** [kg] |
|---|---|
| Granulat fin | 500 |
| (0/4 Bernières) | |
| Granulat grossier | 1500 |
| (16/22 Owald) | |
| Ciment | 400 |
| (CEM I 52.5 N Le Teil Super | |
| Blanc) | |
| Plastifiant | 0,45% |
| (CHRYSO^{®} Optima 206) | |
| Eau totale | 190 L |
| Total | 2591,8 |

Après la prise du béton frais (24h), on procède au décoffrage de la pièce moulée et on élimine la surface désactivée de la pièce moulée par jet d'eau à haute pression.

On constate tout d'abord que la pièce se démoule particulièrement facilement.

Par ailleurs, l'émulsion inverse des exemples 4 et 5 permet d'obtenir un aspect esthétique de la surface désactivée conforme aux attentes et remplit donc parfaitement son rôle de désactivant.

On constate en outre une nette amélioration de l'aspect de surface du moule avec une forte réduction du poussiérage et un encrassement quasiment absent.

Le tableau 9 ci-dessous recoupe les observations faites sur la pièce moulée ainsi que sur le moule.

**Tableau 9 : Observations après désactivation négative**

| | **Exemple 4** | **Exemple 5** |
|---|---|---|
| Facilité d'application | Application aisée (+) | Application aisée (+) |
| Effet désactivant | Très satisfaisant (++) | Très satisfaisant (++) |
| Facilité de démoulage par retournement de plaque | facile (+) | facile (+) |
| Poussiérage | moyen (-) | correct (0) |
| Encrassement, restes de béton, points d'accroche | correct (0) | correct (0) |
| Facilité de nettoyage du moule | Facile et rapide (++) possible au chiffon ou à la balayette | Facile et rapide (++) possible au chiffon ou à la balayette |
| Temps de lavage de la dalle | 30 secondes | 40 secondes |
| Facilité de lavage de la dalle | Très facile (++) | Facile (+) |

| | | |
|---|---|---|
| (Les notations signifient : ++ très bon, + bon, o correct, - moyen, -- mauvais) | | |

### EXEMPLE 6

Dans un récipient approprié muni de moyens d'agitation mécanique, on introduit:
- 177,45 g d'hydrocarbures aliphatiques C10-C13
- 121,20 g d'une huile minérale de base paraffinique raffinée

Cette phase est mise à chauffer avec comme consigne 65°C. Lorsque la température a atteint 40°C, on introduit 7,95 g d'un acide gras de suint, 26,86 g d'une cire paraffinique, dont la température de congélation est comprise entre 71 et 82°C, 8,7 g d'une alkylamine éthoxylée et 3,60 g d'un biocide. On chauffe jusqu'à atteindre la température de 65°C, et l'on poursuit l'homogénéisation à cette température pendant 5 minutes.

Dans un autre récipient approprié, on procède à la dissolution de la quantité souhaitée de retardateur dans l'eau, à température ambiante.

On place le récipient contenant la phase huileuse sous agitation assurée par un mélangeur haut cisaillement de laboratoire de marque Silverson, modèle L4RT muni d'une grille d'émulsion fine (diamètre des trous = 0,8 mm), et l'on introduit la phase aqueuse. On procède ainsi à l'émulsification sous cisaillement (à vitesse maximale dudit mélangeur) pendant 5 minutes.

**Tableau 10 : Compositions de l'émulsion inverse**

| | Exemple Phase huileuse (% en poids) | Eau (% en poids) | Gluconate de sodium (poudre) (% en poids) |
|---|---|---|---|
| 6 | 46,1 | 48,9 | 5 |

Un moule carré pour pièce de béton préfabriqué (acier, dimension 40*40 cm) a été enduit au rouleau avec 18,7 g de l'émulsion inverse de l'exemple 6. Dans le moule ainsi enduit a été coulé un béton F fraîchement préparé de composition indiquée dans le tableau 9 ci-dessous (dans les formules de béton, les pourcentages sont donnés en masse par rapport à la masse du ciment).

**Tableau 11 : Composition de béton F**

| **Composants** | **Teneur [kg]** |
|---|---|
| Granulat fin | 390 |
| (0/4 Bernières) | |
| Granulat moyen | 1500 |
| (6/10 Lampourdier) | |
| Ciment | 400 |
| (CEM I 52.5 N Le Teil Super Blanc) | |
| Plastifiant | 0,45% |
| (CHRYSO^{®} Optima 206) | |
| Eau totale | 173 L |
| Total | 2464,8 |

Après la prise du béton frais (24h), on procède au décoffrage de la pièce moulée et on élimine la surface désactivée de la pièce moulée par jet d'eau à haute pression.

Il est observé une bonne facilité de démoulage de la pièce. Le moule après démoulage se nettoie facilement. Il est observé que la creuse obtenue avec l'émulsion inverse de l'exemple 4 est moins importante que celle obtenue avec l'émulsion inverse de l'exemple 6. Cela met en évidence qu'une augmentation de la quantité de phase huileuse correspond à une diminution de la profondeur de creuse.

L'émulsion inverse selon la présente invention, grâce à la dispersion de la phase aqueuse, assure un effet de désactivation convenable associé à un effet démoulant lorsqu'elle est utilisée en fond de moule.

## Revendications

1. Emulsion inverse, constituée d'une phase huileuse continue comprenant au moins un émulsifiant, dans laquelle est dispersée une phase aqueuse comprenant au moins un retardateur de prise de liants hydrauliques, dans laquelle ladite émulsion comprend 15 à 70% en poids de phase aqueuse, 25 à 75% en poids de phase huileuse, 0,01 à 20% en poids d'émulsifiant et 0,1 à 20% en poids de retardateur de prise, le retardateur de prise est un sucre et la phase huileuse est liquide à température ambiante.

2. Emulsion inverse selon la revendication 1 comprenant de 45 à 80% de phase huileuse et de 25 à 50% en poids de phase aqueuse.

3. Emulsion inverse selon la revendication 1 ou 2, dans laquelle le retardateur de prise est choisi parmi le glucose, le fructose, le saccharose, le méritose, le lactose, le maltotriose, le dextrose, le maltose, le galactose, le mannose, le glycogène ou l'un de leurs mélanges.

4. Emulsion inverse selon l'une des revendications 1 à 3, dans laquelle l'émulsifiant présente un indice HLB inférieur à 11 ou le mélange d'émulsifiants présente un HLB global inférieur à 11, de préférence inférieur à 8, de préférence compris entre 3 et 6.

5. Emulsion selon l'une des revendications 1 à 4, comprenant en % en poids par rapport au poids total de la composition:
- 25 à 75% de phase huileuse ;
- 15 à 70% de phase aqueuse ;
l'émulsion comportant par ailleurs :
- 0,5 à 10%, de préférence 1 à 5% d'émulsifiant; et
- 0,5 à 15% et tout particulièrement de 1 à 10% de retardateur de prise dissout dans la phase aqueuse.

6. Procédé de préparation d'une émulsion inverse selon l'une des revendications 1 à 5, comprenant les étapes consistant à :
(i) préparer la phase aqueuse comprenant au moins un composé retardateur de prise et les autres additifs éventuels ;
(ii) préparer la phase huileuse comprenant au moins un émulsifiant et les autres additifs éventuels ; et
(iii) mélanger des deux phases dans un dispositif adapté jusqu'à obtention d'une émulsion inverse.

7. Procédé de désactivation positive en surface d'une composition hydraulique, comprenant les étapes consistant en :
(a) la mise en forme de la composition hydraulique ;
(b) l'application sur la surface de la composition hydraulique d'une quantité appropriée de l'émulsion inverse selon l'une des revendications 1 à 5; et
(c) après durcissement de la composition hydraulique, l'élimination des résidus de l'émulsion de l'invention avec la couche superficielle de composition hydraulique non durcie.

8. Procédé de désactivation négative en surface d'une composition hydraulique, comprenant les étapes consistant en :
(1) l'application d'une quantité appropriée de l'émulsion selon l'une des revendications 1 à 5 sur la surface d'un moule approprié;
(2) la mise en place de la composition hydraulique dans le moule ; et
(3) après durcissement de la composition hydraulique, le démoulage de la pièce et élimination des résidus de l'émulsion et de la couche superficielle non prise.

9. Procédé de désactivation selon l'une des revendications 7 ou 8, dans lequel l'étape (1) est réalisée par pulvérisation et/ou au rouleau.

10. Procédé de désactivation selon l'une des revendications 7 à 9, dans lequel l'élimination est faite par lavage à l'eau ou par brossage.

## Patentansprüche

1. Invertemulsion, bestehend aus einer kontinuierlichen Ölphase, die mindestens einen Emulgator umfasst, in der eine wässrige Phase dispergiert ist, die mindestens einen Abbindeverzögerer für hydraulische Bindemittel umfasst, wobei die Emulsion 15 bis 70 Gew.-% wässrige Phase, 25 bis 75 Gew.-% Ölphase, 0,01 bis 20 Gew.-% Emulgator und 0,1 bis 20 Gew.-% Abbindeverzögerer umfasst, wobei der Abbindeverzögerer ein Zucker ist und die Ölphase bei Raumtemperatur flüssig ist.

2. Invertemulsion nach Anspruch 1, umfassend 45 bis 80 Gew.-% Ölphase und 25 bis 50 Gew.-% wässrige Phase.

3. Invertemulsion nach Anspruch 1 oder 2, wobei der Abbindeverzögerer aus Glucose, Fructose, Saccharose, Meritose, Lactose, Maltotriose, Dextrose, Maltose, Galactose, Mannose, Glykogen oder einem derer Gemische ausgewählt ist.

4. Invertemulsion nach einem der Ansprüche 1 bis 3, wobei der Emulgator einen HLB-Wert von weniger als 11 aufweist oder das Emulgatorgemisch einen Gesamt-HLB von weniger als 11, vorzugsweise weniger als 8, vorzugsweise zwischen 3 und 6, aufweist.

5. Emulsion nach einem der Ansprüche 1 bis 4, umfassend in Gewichtsprozent bezogen auf das Gesamtgewicht der Zusammensetzung:
- 25 bis 75 % Ölphase;
- 15 bis 70 % wässrige Phase;
wobei die Emulsion unter anderem aufweist:
- 0,5 bis 10 %, vorzugsweise 1 bis 5 % Weichmacher; und
- 0,5 bis 15 % und ganz besonders 1 bis 10 % in der wässrigen Phase gelösten Abbindeverzögerer.

6. Verfahren zur Herstellung einer Invertemulsion nach einem der Ansprüche 1 bis 5, umfassend die folgenden Schritte:
(i) Herstellen der wässrigen Phase, die mindestens eine abbindeverzögernde Verbindung und die gegebenenfalls weiteren Zusatzstoffe umfasst;
(ii) Herstellen der Ölphase, die mindestens einen Emulgator und die gegebenenfalls weiteren Zusatzstoffe umfasst; und
(iii) Mischen der beiden Phasen in einer geeigneten Vorrichtung bis zum Erhalt einer Invertemulsion.

7. Verfahren zur positiven Oberflächendeaktivierung einer hydraulischen Zusammensetzung, das die folgenden Schritte umfasst:
(a) das Formen der hydraulischen Zusammensetzung;
(b) das Aufbringen einer geeigneten Menge der Invertemulsion nach einem der Ansprüche 1 bis 5 auf die Oberfläche der hydraulischen Zusammensetzung; und
(c) nach dem Aushärten der hydraulischen Zusammensetzung das Entfernen der Rückstände der erfindungsgemäßen Emulsion mit der Oberflächenschicht der ungehärteten hydraulischen Zusammensetzung.

8. Verfahren zur negativen Oberflächendeaktivierung einer hydraulischen Zusammensetzung, das die folgenden Schritte umfasst:
(1) das Aufbringen einer geeigneten Menge der Emulsion nach einem der Ansprüche 1 bis 5 auf die Oberfläche einer geeigneten Form;
(2) das Einbringen der hydraulischen Zusammensetzung in die Form; und
(3) nach dem Aushärten der hydraulischen Zusammensetzung das Entformen des Teils und das Entfernen der Rückstände der Emulsion und der nicht abgebundenen Oberflächenschicht.

9. Deaktivierungsverfahren nach einem der Ansprüche 7 oder 8, wobei der Schritt (1) durch Sprühen und/oder mit der Walze durchgeführt wird.

10. Deaktivierungsverfahren nach einem der Ansprüche 7 bis 9, wobei das Entfernen durch Waschen mit Wasser oder durch Bürsten erfolgt.

## Claims

1. Reverse emulsion, consisting of a continuous oily phase comprising at least one emulsifier, in which an aqueous phase is dispersed comprising at least one setting retarder for hydraulic binders, wherein said emulsion comprises 15 to 70% by weight of aqueous phase, 25 to 75% by weight of oily phase, 0.01 to 20% by weight of emulsifier and 0.1 to 20% by weight of setting retarder, the setting retarder is a sugar and the oily phase is liquid at room temperature.

2. Reverse emulsion according to claim 1, comprising from 45 to 80% of oily phase and from 25 to 50% by weight of aqueous phase.

3. Reverse emulsion according to claim 1 or 2, wherein the setting retarder is selected from among glucose, fructose, saccharose, meritose, lactose, maltotriose, dextrose, maltose, galactose, mannose, glycogen or one of their mixtures.

4. The reverse emulsion according to one of claims 1 to 3, wherein the emulsifier has an HLB index of less than 11 or the mixture of emulsifiers has an overall HLB of less than 11, preferably less than 8, preferably comprised between 3 and 6.

5. The emulsion according to one of claims 1 to 4, comprising in % by weight based on the total weight of the composition:
- 25 to 75% of oily phase;
- 15 to 70% of aqueous phase;
the emulsion also including:
- 0.5 to 10%, preferably 1 to 5% of emulsifier; and
- 0.5 to 15% and most particularly from 1 to 10% of setting retarder dissolved in the aqueous phase.

6. Method for preparing a reverse emulsion according to one of claims 1 to 5, comprising the steps consisting of:
(i) preparing the aqueous phase comprising at least one setting retarder compound and the other optional additives;
(ii) preparing the oily phase comprising at least one emulsifier and the other optional additives; and
(iii) mixing both phases in a suitable device until a reverse emulsion is obtained.

7. Method for positive deactivation at the surface of a hydraulic composition, comprising the steps consisting of:
(a) shaping the hydraulic composition;
(b) applying on the surface of the hydraulic composition a suitable amount of the reverse emulsion according to one of claims 1 to 5; and
(c) after curing the hydraulic composition, removing the residues of the emulsion of the invention with the non-hardened surface layer of the hydraulic composition.

8. Method for negative deactivation at the surface of a hydraulic composition, comprising the steps consisting of:
(1) applying a suitable amount of the emulsion according to one of claims 1 to 5 onto the surface of a suitable mold;
(2) placing the hydraulic composition into the mold ; and
(3) after curing the hydraulic composition, removing the part from the mold and removing the residues of the emulsion and the non-set surface layer.

9. The deactivation method according to one of claims 7 or 8, wherein the step (1) is carried out by spraying and/or with a roller.

10. The deactivation method according to one of claims 7 to 9, wherein the removal is accomplished by washing with water or by brushing.
